# EUROPEAN PATENT APPLICATION

(11) **EP 4 807 196 A1**
(43) Date of publication of application: **16.09.2026**
(21) Application number: 25163533.0
(22) Date of filing: 13.03.2025
(51) Int. Cl.: F16B 5/06, F16B 5/02, F16B 29/00, F16B 43/00

(54) **A BOLT ASSEMBLY AND METHOD FOR ENHANCED SHEAR RESISTANCE**

(71) Applicant: Volvo Truck Corporation, 405 08 Göteborg (SE)
(72) Inventor: AR, Shreeharsha, 417 16 Gothenburg (SE); EDHOLM, Tobias, 418 73 Göteborg (SE)
(74) Representative: Zacco Sweden AB

(57) **Abstract**

A bolt assembly for fastening at least one structural element having a fastening hole, the bolt assembly comprising: a bolt comprising a head and a body, wherein the body comprises: a shank portion extending from the head, and a threaded portion extending from the shank portion, wherein the threaded portion is configured to engage with a nut or a threaded hole; a sleeve configured to be fitted onto the shank portion of the bolt; and wherein the bolt assembly is characterized in that the sleeve comprises a plurality of outward-extending protrusions and configured to undergo plastic deformation upon engagement with the fastening hole.

## Description

### TECHNICAL FIELD

The disclosure relates generally to fastening systems. In particular aspects, the disclosure relates to a bolt assembly for enhanced shear resistance. The disclosure relates to any application requiring the fastening of one or more structural elements, with particular advantages for the assembly of heavy-duty vehicles like trucks, buses, and construction equipment, but is not limited to these applications.

### BACKGROUND

Current fastener solutions, such as bolts and rivets, are commonly used in chassis assembly, particularly in heavy-duty vehicles like trucks. Bolts offer ease of assembly and disassembly but lack the shear strength provided by rivets. On the other hand, rivets provide higher shear strength but are more difficult to assemble and disassemble, limiting their practical use in some applications.

Hence, there is a need for a fastener that can offer both ease of assembly and disassembly while providing improved shear strength compared to standard bolts. Such a fastener could enhance the performance and durability of joints in heavy-duty vehicles and other constructions where shear resistance is critical.

### SUMMARY

According to a first aspect of the disclosure, a bolt assembly for fastening at least one structural element having a fastening hole is disclosed. The bolt assembly comprises: a bolt comprising a head and a body, wherein the body comprises: a shank portion extending from the head, and a threaded portion extending from the shank portion, wherein the threaded portion is configured to engage with a corresponding nut or a threaded hole; a sleeve configured to be fitted onto the shank portion of the bolt; and wherein the bolt assembly is characterized in that the sleeve comprises a plurality of outward-extending protrusions configured to undergo plastic deformation upon engagement with the fastening hole. The first aspect of the disclosure may seek to provide a bolt assembly that offers both simplified disassembly and enhanced shear strength. A technical benefit may include greater endurance and reduced risk of failures resulting from shear stress.

Optionally in some examples, including in at least one preferred example, the sleeve has material properties different from those of the bolt, including higher ductility relative to the bolt, thereby facilitating plastic deformation of the sleeve during fastening. A technical benefit may include the ability of the sleeve to deform more easily and thus more effectively fill the fastening hole.

Optionally in some examples, including in at least one preferred example, the plurality of protrusions are formed from grooves, whereby the peaks of the grooves correspond to the protrusions. Technical benefits may include greater mechanical interlocking between the sleeve and the fastening hole, and uniform deformation behavior across the surface of the sleeve.

Optionally in some examples, including in at least one preferred example, the grooves extend along the axial direction of the sleeve. A technical benefit may include improved interlocking, effectively preventing rotational slippage of the sleeve.

Optionally in some examples, including in at least one preferred example, the sleeve comprises a tapered lead-in to facilitate insertion of the bolt assembly into the fastening hole. A technical benefit may include easier alignment and insertion of the bolt assembly.

Optionally in some examples, including in at least one preferred example, the sleeve and the shank portion are configured to be securely attached, the attachment being achieved through threading, interference fit, adhesive bonding, or any other securing method that ensures the sleeve remains fixed to the shank portion. A technical benefit may include increased reliability and durability of the assembly, as the sleeve remains securely fixed even under stress or vibration.

Optionally in some examples, including in at least one preferred example, the attachment is achieved through an interference fit, and the shank portion comprises grooves with a tapered lead-in toward the threaded portion. A technical benefit may include improved ease of assembly.

Optionally in some examples, including in at least one preferred example, the sleeve includes an expansion slot to allow for the expansion of its circumference. A technical benefit may include greater adaptability to varying bolt dimensions.

Optionally in some examples, including in at least one preferred example, the expansion slot comprises an interlocking mechanism to prevent displacement of the opposite ends of the sleeve. A technical benefit may include ensuring that the opposite ends of the expansion slot do not misalign or separate.

Optionally in some examples, including in at least one preferred example, the sleeve is a coating layer applied to the shank portion. A technical benefit may include simplified assembly process as the coating eliminates the need to manually fit a separate sleeve onto the bolt.

Optionally in some examples, including in at least one preferred example, the sleeve has a length that is greater than the total combined thickness of the at least one structural element. A technical benefit may include ensuring that the sleeve fills the entire depth of the fastening hole, thereby enhancing shear strength.

Optionally in some examples, including in at least one preferred example, the bolt assembly, further comprises a nut configured to engage with the threaded portion of the bolt and act as a stop for the sleeve, thereby aiding in the plastic deformation of the sleeve during fastening. A technical benefit may include the nut pushing the sleeve material back into the fastening hole, thereby ensuring that the sleeve fills the entire fastening hole and enhances shear strength.

According to a second aspect of the disclosure, a method for fastening at least one structural element having a fastening hole with a bolt assembly according to any of the examples of the first aspect. The method comprises: positioning the sleeve onto the shank portion of the bolt; inserting the bolt assembly through the fastening hole; applying a force to the bolt, driving the head toward the at least one structural element, thereby inducing plastic deformation of the sleeve as it engages with the fastening hole; and securing the bolt assembly by tightening a nut to the threaded portion of the bolt to compress the sleeve, thereby aiding in the plastic deformation of the sleeve. The second aspect of the disclosure may seek to provide a method that offers both simplified disassembly and enhanced shear strength. A technical benefit may include greater endurance and reduced risk of failures resulting from shear stress.

Optionally in some examples, applying a force to the head comprises hammering the bolt to drive it through the aligned holes. Alternatively, in some examples, applying a force to the bolt comprises engaging the nut against the at least one structural element to drive the bolt through the fastening hole.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 illustrates the bolt assembly comprising a bolt, a sleeve and a nut, according to an example.
FIGS. 2A-2C illustrate a cross-sectional view of the bolt assembly, demonstrating the plastic deformation of the sleeve during fastening, according to an example.
FIG. 3A illustrates a cross-sectional view of the bolt assembly, showing the sleeve with chamfered or tapered lead-ins, according to an example.
FIG. 3B illustrates a cross-sectional view of the bolt assembly, showing the sleeve with chamfered or tapered lead-ins on both its inner and outer surfaces, according to an example.
FIG. 4A-4C illustrate three examples of interlocking mechanisms for the expansion slot of the sleeve.
FIG. 5 is a flowchart of a method for fastening at least one structural element having a fastening hole with a bolt assembly, according to the example.

### DETAILED DESCRIPTION

The detailed description set forth below provides information and examples of the disclosed technology with sufficient detail to enable those skilled in the art to practice the disclosure.

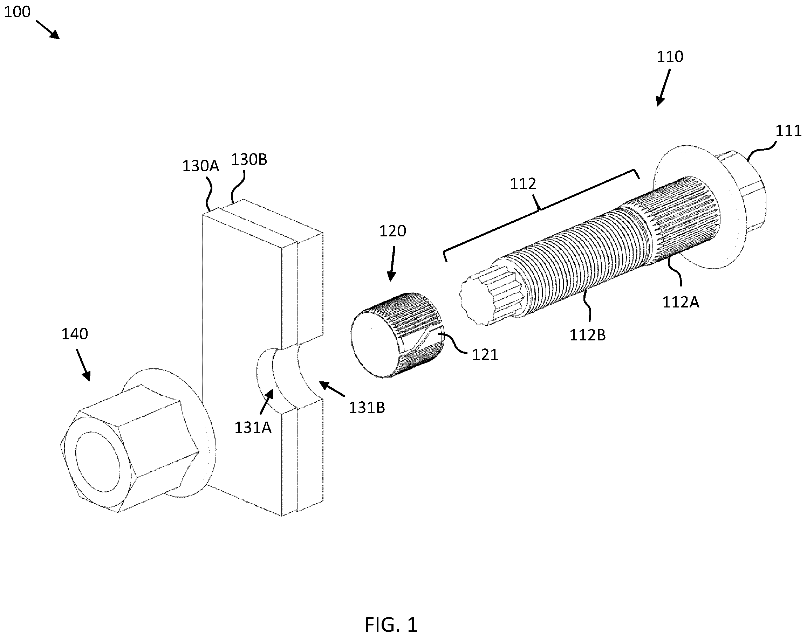

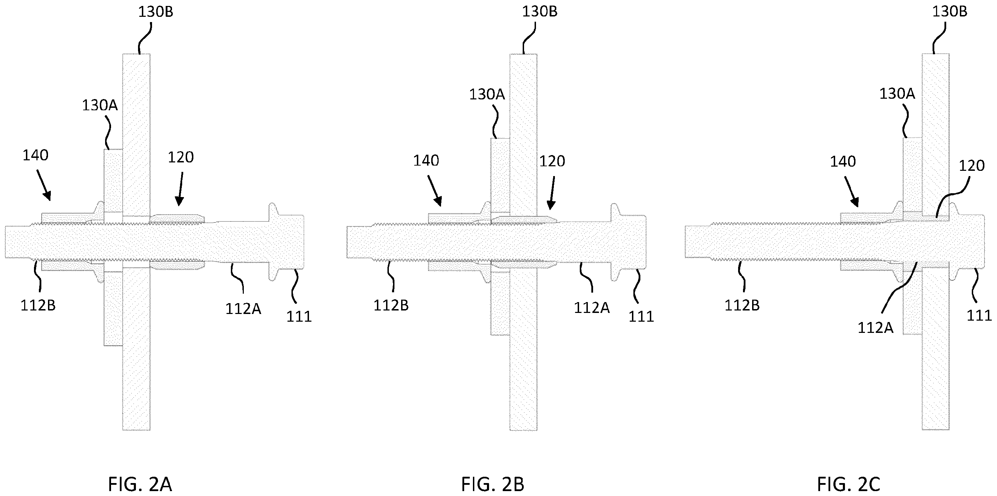

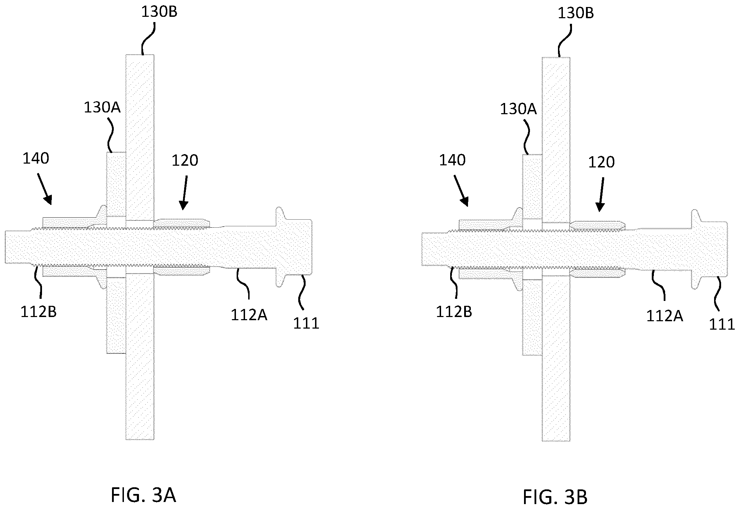

FIGS. 1-4 illustrate a first aspect of the disclosure relating to a bolt assembly 100 for improved shear strength. While both FIGS. 1-2 show the various elements of the bolt assembly, FIGS. 2A-2B further demonstrate the plastic deformation of the sleeve 120 during the fastening process. Specifically, FIG. 2A shows the sleeve before insertion, FIG. 2B during insertion, and FIG. 3A after plastic deformation. FIGS. 3A and 3B provide some examples showing the sleeve with chamfered or tapered lead-ins.

In FIGS. 1-2, the structural elements 130A, 130B are represented by two metal plates that are held together by the bolt assembly 100. The metal plates each have a fastening hole 131A, 131B that aligns when the plates are held together by the bolt assembly 100. The bolt assembly will experience shear forces due to movement of one or both metal plates 130A, 130B. The purpose of the bolt assembly 100, according to the first aspect of the disclosure, is to mitigate the effect of these forces by enhancing the shear strength. It should be noted that the term fastening hole may refer to a fastening hole of a single structural element, or to aligned fastening holes of multiple structural elements when assembled.

The bolt assembly 100 comprises a bolt 110 comprising a head 111 and a body 112. The body 112 of the bolt comprises a shank portion 112A extending from the head, and a threaded portion 112B extending from the shank portion. The threaded portion 112B is configured to engage with a corresponding nut 140 or a threaded hole. The bolt assembly further comprises a sleeve 120 configured to be fitted onto the shank portion 112A of the bolt. The sleeve is configured to configured to undergo plastic deformation upon engagement with the fastening hole. In some examples, the bolt assembly 100 is characterized in that the sleeve 120 comprises a plurality of outward-extending protrusions configured to undergo plastic deformation upon engagement with the fastening hole 131A, 131B. The protrusions facilitate deformation by adjusting the sleeve's structural behavior, ensuring a snug engagement with the fastening hole.

The sleeve 120 should typically have dimensions that exceed those of the fastening hole 131A, 131B, particularly in terms of circumference, to ensure proper engagement with the fastening hole. Alternatively, the sleeve should contain a sufficient volume of material to fill the space between the bolt 110 and the fastening hole 131A, 131B. In one example, the sleeve's length exceeds the total combined thickness of the structural elements 130A, 130B. In this configuration, the bolt assembly 100 may also include a nut designed to engage with the threaded portion of the bolt and serve as a stop for the sleeve 120. The nut 140 forces the sleeve material back into the fastening hole 131A, 131B, ensuring that the sleeve completely fills the hole and thereby enhances the shear strength of the assembly.

The sleeve 120 may preferably have material properties different from those of the bolt 110, including higher ductility relative to the bolt, thereby facilitating plastic deformation of the sleeve during fastening. For example, the material of the sleeve may be similar to that used in rivets, such as aluminum or soft steel, while the bolt might be made of harder steel or titanium. However, the materials for both the sleeve and the bolt are not restricted to these examples.

The plurality of protrusions on the sleeve 120 are typically formed from grooves, with the peaks of these grooves constituting the protrusions. This design facilitates improved mechanical interlocking between the sleeve and the fastening hole and provides uniform deformation behavior across the surface of the sleeve. Preferably, the grooves extend along the axial direction of the sleeve, which effectively prevents rotational slippage of the sleeve. The sleeve 120 may also comprise chamfered or tapered lead-ins to facilitate easier insertion and alignment of the bolt assembly 100 into the fastening hole 131A, 131B. The sleeve 120 may also comprise chamfered or tapered lead-ins on its inner surface to facilitate simplified assembly of the sleeve onto the bolt.

**In** some examples, it may be important that the sleeve 120 and the shank portion 112A are securely attached to prevent rotational slippage. This attachment can be achieved through threading, interference fit, adhesive bonding, or any other securing method that ensures the sleeve remains fixed to the shank portion 112A. An advantage may be increased reliability and durability of the assembly, as the sleeve remains securely fixed even under stress or vibration. One example of this is if the attachment is achieved through an interference fit, where the shank portion 112A comprises grooves with a tapered lead-in toward the threaded portion 112B. The grooves form the interference fit, and the tapered lead-in facilitates ease of assembly. Preferably, the grooves extend along the axial direction of the shank portion 112A, which effectively prevents rotational slippage of the sleeve.

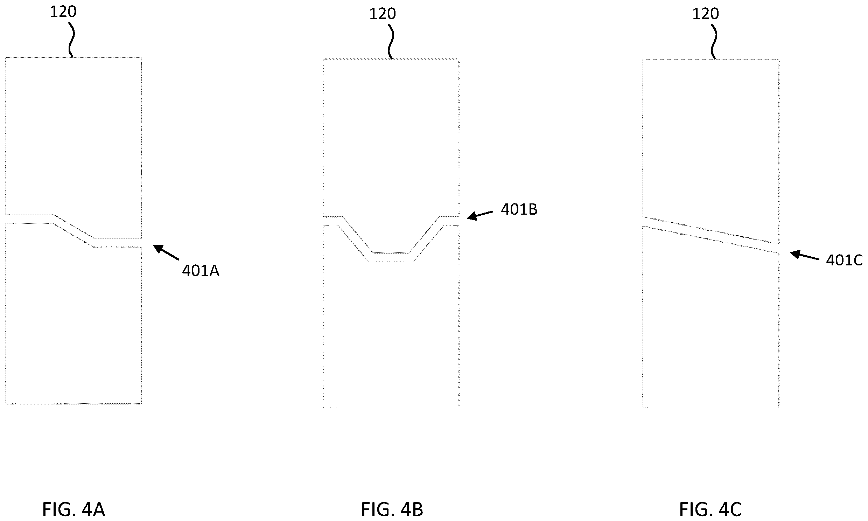

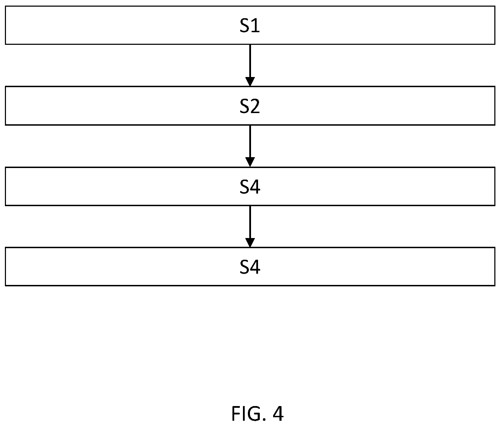

In some examples, the sleeve 120 may also include an expansion slot 121 to allow for the expansion of its circumference. This provides the advantage of greater adaptability to varying bolt dimensions. Preferably, the expansion slot 121 also includes an interlocking mechanism 401A, 401B, 401C to prevent displacement of the opposite ends of the sleeve 120. FIGS. 4A-4C illustrate three alternative interlocking mechanisms 401A, 401B, 401C. The interlocking mechanism ensures that the opposite ends of the expansion slot 121 do not misalign or separate.

Alternatively, the sleeve 120 may be a coating layer applied to the shank portion 112A. This may simplify the assembly process as the coating eliminates the need to manually fit a separate sleeve onto each bolt.

FIG. 5 illustrates a second aspect of the disclosure relating to a method for fastening at least one structural element 130A, 130B having a fastening hole 131A, 131B with a bolt assembly 100 according to any of the examples of the first aspect.

The method comprises: positioning S1 the sleeve 120 onto the shank portion 112A of the bolt 110. The method also comprises inserting S2 the bolt assembly 100 through the fastening hole 131A, 131B. Further, the method comprises applying S3 a force to the bolt 110, thereby driving the head 111 toward the at least one structural element 130A, 130B which induces plastic deformation of the sleeve 120 as it engages with the fastening hole 131A, 131B. In some examples, applying S3 a force to the head 111 comprises hammering the bolt 110 to drive it through the aligned holes 131A, 131B. Alternatively, in some examples, applying a force to the bolt 111 comprises engaging a nut 140 against the at least one structural element 130A, 130B to drive the bolt 110 through the fastening hole 131A, 131B. Lastly, the method comprises securing S4 the bolt assembly 100 by tightening a nut 140 to the threaded portion 112B of the bolt 110 to compress the sleeve, thereby aiding in the plastic deformation of the sleeve 120.

Example 1: A bolt assembly 100 for fastening at least one structural element 130A, 130B having a fastening hole 131A, 131B, the bolt assembly 100 comprising: a bolt 110 comprising a head 111 and a body 112, wherein the body comprises: a shank portion 112A extending from the head, and a threaded portion 112B extending from the shank portion, wherein the threaded portion 112B is configured to engage with a nut 140 or a threaded hole; a sleeve 120 configured to be fitted onto the shank portion of the bolt; and wherein the bolt assembly 100 is characterized in that the sleeve 120 comprises plurality of outward-extending protrusions and is configured to undergo plastic deformation upon engagement with the fastening hole 131A, 131B.

Example 2: The bolt assembly 100 of example 1, wherein the sleeve 120 has material properties different from those of the bolt 110, including higher ductility relative to the bolt, thereby facilitating plastic deformation of the sleeve during fastening.

Example 3: The bolt assembly 100 of any of examples 1-2, wherein the plurality of protrusions are formed from grooves, whereby the peaks of the grooves correspond to the protrusions.

Example 4: The bolt assembly of example 2, wherein the grooves extend along the axial direction of the sleeve.

Example 5: The bolt assembly of any of examples 1-4, wherein the sleeve 120 comprises chamfered or tapered lead-ins to facilitate insertion of the bolt assembly 100 into the fastening hole 131A, 131B.

Example 6: The bolt assembly of any of examples 1-5, wherein the sleeve 120 and the shank portion 112A are configured to be securely attached, the attachment being achieved through threading, interference fit, adhesive bonding, or any other securing method that ensures the sleeve remains fixed to the shank portion 112A.

Example 7: The bolt assembly of example 6, wherein the attachment is achieved through an interference fit formed by grooves on the shank portion 112A, and wherein the grooves on the shank portion have chamfered or tapered lead-ins toward the threaded portion 112B.

Example 8: The bolt assembly of any of examples 6-7, wherein the sleeve 120 includes an expansion slot 121 to allow for the expansion of its circumference.

Example 9: The bolt assembly of example 8, wherein the expansion slot 121 comprises an interlocking mechanism 401A, 401B, 401C to prevent displacement of the opposite ends of the sleeve 120.

Example 10: The bolt assembly of any of examples 1-5, wherein the sleeve is a coating layer applied to the shank portion 112A.

Example 11: The bolt assembly of any of examples 1-10, wherein the sleeve 120 has a length that is greater than the total combined thickness of the at least on structural element 130A, 130B.

Example 12: The bolt assembly of example 11, further comprising a nut, wherein the nut is configured to engage with the threaded portion of the bolt and act as a stop for the sleeve 120, thereby aiding in the plastic deformation of the sleeve during fastening.

Example 13: A method for fastening at least one structural element 130A, 130B having a fastening hole 131A, 131B with a bolt assembly 100 according to any of examples 1-12, the method comprising: positioning S1 the sleeve 120 onto the shank portion 112A of the bolt 110; inserting S2 the bolt assembly 100 through the fastening hole 131A, 131B; applying S3 a force to the bolt 110, driving the head 111 toward the at least one structural element 130A, 130B, thereby inducing plastic deformation of the sleeve 120 as it engages with the fastening hole 131A, 131B; and securing S4 the bolt assembly 100 by tightening a nut 140 to the threaded portion 112B of the bolt 110 to compress the sleeve, thereby aiding in the plastic deformation of the sleeve 120.

Example 14: The method of example 13, wherein applying a force to the bolt 111 comprises hammering the bolt 110 to drive it through the fastening hole 131A, 131B.

Example 15: The method of example 13, wherein applying a force to the bolt 111 comprises engaging a nut 140 against the at least one structural element 130A, 130B to drive the bolt 110 through the fastening hole 131A, 131B.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bolt assembly (100) for fastening at least one structural element (130A, 130B) having a fastening hole (131A, 131B), the bolt assembly (100) comprising:
a bolt (110) comprising a head (111) and a body (112), wherein the body comprises: a shank portion (112A) extending from the head, and a threaded portion (112B) extending from the shank portion, wherein the threaded portion (112B) is configured to engage with a nut (140) or a threaded hole;
a sleeve (120) configured to be fitted onto the shank portion of the bolt; and wherein
the bolt assembly (100) is **characterized in that** the sleeve (120) comprises plurality of outward-extending protrusions and is configured to undergo plastic deformation upon engagement with the fastening hole (131A, 131B).

2. The bolt assembly (100) of claim 1, wherein the sleeve (120) has material properties different from those of the bolt (110), including higher ductility relative to the bolt, thereby facilitating plastic deformation of the sleeve during fastening.

3. The bolt assembly (100) of any of claims 1-2, wherein the plurality of protrusions are formed from grooves, whereby the peaks of the grooves correspond to the protrusions.

4. The bolt assembly of claim 2, wherein the grooves extend along the axial direction of the sleeve.

5. The bolt assembly of any of claims 1-4, wherein the sleeve (120) comprises chamfered or tapered lead-ins to facilitate insertion of the bolt assembly (100) into the fastening hole (131A, 131B).

6. The bolt assembly of any of claims 1-5, wherein the sleeve (120) and the shank portion (112A) are configured to be securely attached, the attachment being achieved through threading, interference fit, adhesive bonding, or any other securing method that ensures that the sleeve remains fixed to the shank portion (112A).

7. The bolt assembly of claim 6, wherein the attachment is achieved through an interference fit formed by grooves on the shank portion (112A), and wherein the grooves on the shank portion have chamfered or tapered lead-ins toward the threaded portion (112B).

8. The bolt assembly of any of claims 6-7, wherein the sleeve (120) includes an expansion slot (121) to allow for the expansion of its circumference.

9. The bolt assembly of claim 8, wherein the expansion slot (121) comprises an interlocking mechanism (401A, 401B, 401C) to prevent displacement of the opposite ends of the sleeve (120).

10. The bolt assembly of any of claims 1-5, wherein the sleeve is a coating layer applied to the shank portion (112A).

11. The bolt assembly of any of claims 1-10, wherein the sleeve (120) has a length that is greater than the total combined thickness of the at least on structural element (130A, 130B).

12. The bolt assembly of claim 11, further comprising a nut, wherein the nut is configured to engage with the threaded portion of the bolt and act as a stop for the sleeve (120), thereby aiding in the plastic deformation of the sleeve during fastening.

13. A method for fastening at least one structural element (130A, 130B) having a fastening hole (131A, 131B) with a bolt assembly (100) according to any of claims 1-12, the method comprising:
positioning (S1) the sleeve (120) onto the shank portion (112A) of the bolt (110);
inserting (S2) the bolt assembly (100) through the fastening hole (131A, 131B);
applying (S3) a force to the bolt 110, driving the head (111) toward the at least one structural element (130A, 130B), thereby inducing plastic deformation of the sleeve (120) as it engages with the fastening hole (131A, 131B); and
securing (S4) the bolt assembly (100) by tightening a nut (140) to the threaded portion (112B) of the bolt (110) to compress the sleeve, thereby aiding in the plastic deformation of the sleeve (120).

14. The method of claim 13, wherein applying a force to the bolt (111) comprises hammering the bolt (110) to drive it through the fastening hole (131A, 131B).

15. The method of claim 13, wherein applying a force to the bolt (111) comprises engaging a nut (140) against the at least one structural element (130A, 130B) to drive the bolt (110) through the fastening hole (131A, 131B).
